# EUROPÄISCHE PATENTSCHRIFT

(11) **EP 1 230 478 B1**
(45) Veröffentlichungstag und Bekanntmachung des Hinweises auf die Patenterteilung: **19.01.2005**
(21) Anmeldenummer: 00977534.7
(22) Anmeldetag: 14.11.2000
(51) Int. Cl.: F03C 1/04, F16D 55/02, F16D 59/02, F16D 63/00

(54) **HYDRAULISCHER RADIALKOLBENMOTOR**
HYDRAULIC RADIAL PISTON MOTOR
MOTEUR A PISTONS RADIAUX HYDRAULIQUE

(30) Priorität: 19.11.1999 DE 19955965
(43) Veröffentlichungstag der Anmeldung: 14.08.2002
(73) Patentinhaber: ZF FRIEDRICHSHAFEN Aktiengesellschaft, 88038 Friedrichshafen (DE)
(72) Erfinder: LEGNER, Jürgen, 88048 Friedrichshafen (DE)
(86) Internationale Anmeldenummer: PCT/EP2000/011212
(87) Internationale Veröffentlichungsnummer: WO 2001/036818

(56) Entgegenhaltungen:
- DE-A- 1 905 455
- DE-A- 19 637 570
- FR-A- 2 678 322

## Beschreibung

Die Erfindung betrifft einen hydraulischen Radialkolbenmotor nach der im Oberbegriff von Anspruch 1 näher definierten Art.

Radialkolbenmotore, vorzugsweise außen abgestützte, langsam laufende, ein hohes Drehmoment abgebende Radialkolbenmotore, können als Zweigang-Motore ausgeführt sein, bei welchen einerseits alle drehmomentabgebenden Kolben mit Druckflüssigkeit von einer Pumpe beaufschlagt sein können und somit der Hydraulikmotor mit einem maximalen Schluckvolumen betrieben wird, bei welchem er ein maximales Drehmoment abgibt, jedoch sich dadurch die Drehzahl verringert und andererseits ist es möglich, den Hydraulikmotor mit nur einem Teil der drehmomentabgebenden Kolben zu betreiben, indem ein Teil der drehmomentabgebenden Kolben mit dem Druckmittelzufluß von der Pumpe verbunden bleibt und ein weiterer Teil der drehmomentabgebenden Kolben mit dem Druckkmittelrückfluß zur Pumpe oder dem Druckmittelreservoir verbunden wird. In diesem Betriebszustand erzeugt der Hydraulikmotor bei gleichbleibendem Druckniveau ein geringeres Drehmoment, kann jedoch bei gleichbleibender Fördermenge der Pumpe eine höhere Drehzahl erzeugen.

In der deutschen Auslegeschrift 19 05 455 ist ein hydrostatischer Radialkolbenmotor offenbart, welcher ein Ventil aufweist, mit welchem der Druckmittelzufluß von der Pumpe mit allen drehmomentabgebenden Kolben verbunden wird und bei Umsteuerung dieses Ventils ein Teil der drehmomentabgebenden Kolben mit dem Druckmittelrückfluß verbunden wird und somit der Hydraulikmotor nur mit einem Teil der drehmomentabgebenden Kolben arbeitet und somit eine höhere Drehzahl erzeugt und ein geringeres Drehmoment abgibt. Das Ventil wird umgeschaltet, indem Druckmittel auf einen Kolben des Ventils wirkt und diesen gegen eine Federkraft verschiebt oder wenn der Kolben gegen die Feder vorgespannt ist, indem das Druckmittel, welches auf den Kolben wirkt, mit einem Druckmittelreservoir verbunden wird und somit die Feder den Kolben wieder in seine Ausgangsposition zurückschiebt. Bei diesen Schaltungen wird schlagartig ein Teil der drehmomenterzeugenden Kolben entweder mit der Druckmittelzuführung oder mit der Druckmittelrückführung verbunden, wodurch, da sich die Drehzahl des Antriebs nicht in der gleichen Zeit an die neue Situation anpassen kann, ein starker Schaltstoß entsteht.

Die DE 196 37 570 A1 offenbart einen hydrostatischmechanischen Radantrieb, bei welchem ein hydraulischer Radialkolbenmotor ein inneres Zentralrad eines Planetengetriebes antreibt. Der hydraulische Radialkolbenmotor ist über eine Bremse bremsbar, welche hydraulisch gelüftet und über Federkraft geschlossen wird und immer dann einfällt, wenn das Druckmittel im Druckmittelzulauf unter ein definiertes Druckniveau fällt. Damit die Bremse nicht bei kurzzeitigem Unterschreiten des Druckniveaus im Druckmittelzulauf einfällt, muß die Feder das Druckmittel gegen eine Drossel ausschieben. Wird ein hydraulischer Motor zum Antrieb einer mobilen Baumaschine, wie z. B. eines Raupenbaggers, verwendet, wie in der DE 196 37 570 A1 offenbart, so kann es bei Verwendung einer automatischen Ansteuerung des Ventils, welches einen Teil oder die Gesamtheit der drehmomenterzeugenden Kolben mit dem Druckflüssigkeitszufluß verbindet, zu sicherheitskritischen Situationen kommen. Ist der hydraulische Antrieb mit einer automatischen Schalteinrichtung ausgestattet, welche oberhalb eines zuvor definierten Druckniveaus im Druckmittelzulauf von der hydraulischen Pumpe zum hydraulischen Motor das Hubraumumschaltventil so schaltet, daß die Gesamtheit der drehmomenterzeugenden Kolben mit dem Druckmittelzulauf verbunden wird und unterhalb eines zuvor definierten Druckniveaus das Hubraumumschaltventil umsteuert, so daß nur noch ein Teil der drehmomenterzeugenden Kolben mit dem Druckmittelzulauf verbunden ist, so wird der hydraulische Motor bei einer Steigungsfahrt, bei welcher das Druckniveau in der Druckmittelzuführung oberhalb des definierten Druckniveaus ist, mit seinem maximalen Schluckvolumen betrieben. Das Hubraumumschaltventil ist somit so umgesteuert, daß die Gesamtheit der drehmomenterzeugenden Kolben mit dem Druckmittelzulauf verbunden ist. Reduziert der Fahrer nun den Druckmittelstrom von der Pumpe zum hydraulischen Motor, um am Hang anzuhalten, so sinkt der Druck in der Druckmittelzuführung zum Motor ab, so daß das Hubraumumschaltventil umschaltet, um nur noch einen Teil der drehmomenterzeugenden Kolben mit dem Druckmittelzulauf zu verbinden. Da die Bremse druckbetätigt öffnet und über Federkraft geschlossen wird, muß beim Schließen der Bremse, welches automatisch immer dann geschieht, wenn der Druck im Zulauf zum hydraulischen Motor unter ein definiertes Druckniveau absinkt, Druckmittel aus der Betätigungseinrichtung der Bremse herausgeschoben werden. Um zu verhindern, daß die Bremse auch bei sehr kurzem Druckabfall sofort einfällt, muß das Druckmittel der Betätigungseinrichtung der Bremse gegen eine Drosselstelle ausgeschoben werden, wodurch die Bremse verzögert einfällt. Da jedoch beim Umschalten des Druckmittelzulaufs von der Gesamtheit der drehmomenterzeugenden Kolben auf einen Teil der drehmomenterzeugenden Kolben im Hubraumumschaltventil ein Zustand auftritt, bei welchem die Gesamtheit der drehmomenterzeugenden Kolben direkt mit dem Druckmittelrücklauf verbunden ist, die Bremse jedoch noch nicht eingefallen ist, rollt die Baumaschine hangabwärts, bis die Bremse einfällt bzw. die Verbindung wieder verschlossen ist. Dadurch kann es zu sicherheitskritischen Situationen kommen. Wird die Baumaschine mit einer automatischen Schalteinrichtung, bei welcher unterhalb eines definierten Druckniveaus nur ein Teil der drehmomenterzeugenden Kolben mit dem Druckmittelzulauf verbunden ist, talabwärts bewegt und der Fahrer der Baumaschine reduziert den Druckmittelstrom zum hydraulischen Motor, um das Fahrzeug abzubremsen, so kann der hydraulische Motor nur ein maximales Bremsmoment mit einem Teil der drehmomenterzeugenden Kolben mit dem Druckniveau des Bremsventils bzw. Druckbegrenzungsventils erzeugen. Dadurch kann ein sicherheitskritischer Zustand erreicht werden.

Der vorliegenden Erfindung liegt die Aufgabe zugrunde, einen hydraulischen Radialkolbenmotor zu schaffen, bei welchem beim Umschalten des Druckmittelzulaufs von der Gesamtheit der drehmomenterzeugenden Kolben auf einen Teil der drehmomenterzeugenden Kolben und beim Umschalten des Druckmittelzulaufs von einem Teil der drehmomenterzeugenden Kolben auf die Gesamtheit der drehmomenterzeugenden Kolben der Schaltstoß verringert wird und beim Betrieb des hydraulischen Radialkolbenmotors keine sicherheitskritischen Zustände auftreten können.

Die Aufgabe wird mit einem, auch die kennzeichnenden Merkmale des Hauptanspruchs aufweisenden, gattungsgemäßen hydraulischen Radialkolbenmotor gelöst.

Erfindungsgemäß wird das Ventil zum Verbinden der drehmomenterzeugenden Kolben mit dem Druckmittelzufluß von einem Druckmittel betätigt, welches gedrosselt zu- bzw. abfließt und so das Ventil gedrosselt gegen eine Federkraft verschiebt bzw. von der Federkraft gegen das abfließende Druckmittel gedrosselt verschoben werden kann. Da das Ventil den Druckmittelzulauf zu den Kolben steuert und selbst von einem Druckmittel umgesteuert wird, welches gedrosselt zu- oder abfließt, muß zwischen dem Druckmittelzulauf zum hydraulischen Motor bzw. zu den Kolben und dem Betätigungsraum für das Druckmittel des Ventils eine Dichtstelle angeordnet sein, da andernfalls Druckmittel aus dem Druckmittelzulauf zum hydraulischen Motor bzw. zu den Kolben über einen Spalt in den Betätigungsraum des Ventils gelangen kann und die gedrosselte Betätigung des Ventils somit negativ beeinflußt. Die Drosselstelle im Zulauf und im Rücklauf zum Betätigen des Ventils zum Verbinden der drehmomenterzeugenden Kolben mit dem Druckmittelzufluß kann einen definierten Wert aufweisen oder in Abhängigkeit von Betriebsparametern, wie z. B. der Druckmitteltemperatur oder Drehzahl, veränderbar ausgeführt sein. Vorzugsweise ist der Kolben des Ventils zum Verbinden der drehmomenterzeugenden Kolben mit dem Druckmittelzufluß so ausgeführt, daß beim Umsteuern des Ventils von einer ersten Stellung in eine zweite Stellung sich der Querschnitt, welcher die beiden Teile der drehmomenterzeugenden Kolben verbindet bzw. trennt, nahezu gleichmäßig über dem Verschiebeweg des Kolbens verändert, so daß kein plötzlicher Sprung im Querschnitt des Druckmittelstroms vorhanden ist und somit ein unerwünschter Schaltdruck verhindert wird. Dies kann vorzugsweise dadurch ausgeführt sein, daß die Flanken der Verbindungsnuten im Kolben des Ventils als schräge Ebenen ausgeführt sind oder Nuten aufweisen, welche so geformt sind, daß der Querschnitt sich beim Verschieben des Kolbens nahezu gleichmäßig ändert. Der Kolben des Ventils muß so ausgeführt sein, daß sich der Querschnitt bei einer Schaltung von der Gesamtheit der drehmomenterzeugenden Kolben auf einen Teil der drehmomenterzeugenden Kolben und bei einer Schaltung von einem Teil der drehmomenterzeugenden Kolben auf die Gesamtheit der drehmomenterzeugenden Kolben nahezu gleichmäßig ändert. Vorzugsweise ist das Ventil zum Verbinden der drehmomenterzeugenden Kolben mit dem Druckmittelzufluß koaxial in einer Druckmittelzuführung, welche Druckmittel zu einem Kolbenträger leitet, angeordnet. Somit ist das Ventil in einem Bauraum des hydraulischen Radialkolbenmotors untergebracht, welcher sonst ungenutzt wäre. Es ist jedoch auch möglich, das Ventil zum Verbinden der drehmomenterzeugenden Kolben mit dem Druckmittelzufluß um den Hubraum des hydraulischen Radialkolbenmotors umzuschalten, außerhalb des Radialkolbenmotors anzubringen. Vorzugsweise ist das Ventil zum Verbinden der drehmomenterzeugenden Kolben mit dem Druckmittelzufluß über eine Federkraft so geschaltet, daß unterhalb eines definierten Druckniveaus in der Druckmittelzuführung zum hydraulischen Radialkolbenmotor die Gesamtheit der drehmomenterzeugenden Kolben mit dem Druckmittelzufluß verbunden ist. Somit ist gewährleistet, daß bei einem Defekt der Druckmittelzuführung zum Umsteuern des Ventils der hydraulische Radialkolbenmotor mit seiner Gesamtheit der drehmomenterzeugenden Kolben und somit mit seinem maximalen Drehmoment betrieben werden kann. Vorzugsweise ist der hydraulische Radialkolbenmotor über ein Planetengetriebe mit einem Antriebsrad für eine Raupe, vorzugsweise eines Raupenbaggers, verbunden, kann jedoch auch direkt mit dem Abtrieb verbunden sein. Somit ist gewährleistet, daß bei einem kompakten Antrieb ausreichend Drehmoment erzeugt wird. Indem der Kolbenträger des hydraulischen Motors mit einer Bremse in Verbindung steht, wird das Bremsmoment über die Planetenstufe noch verstärkt. Um zu gewährleisten, daß keine sicherheitskritischen Zustände auftreten, ist in der Druckmittelzuführung zum Ventil zum Umsteuern des Hubraums des Radialkolbenmotors ein Ventil vorgeschaltet angeordnet, welches über Federkraft in einer Ausgangsstellung gehalten wird, bis ein Druckniveau im Druckmittelzulauf zum hydraulischen Radialkolbenmotor ein definiertes Druckniveau übersteigt. In der Ausgangsstellung dieses Ventils ist die Druckmittelzuführung zum Umsteuern des Ventils zum Verbinden der drehmomenterzeugenden Kolben mit dem Druckmittelzufluß unterbrochen. Damit ist gewährleistet, daß unterhalb eines definierten Druckniveaus im Druckmittelzulauf zum hydraulischen Motor immer die Gesamtheit aller drehmomenterzeugenden Kolben mit dem Druckmittelzulauf verbunden ist. Dadurch ist gewährleistet, daß bei einer gewünschten Bremsung bei Talfahrt des Fahrzeugs der Hydraulikmotor mit der Gesamtheit der drehmomenterzeugenden Kolben gegen das Bremsventil bzw. das Überdruckventil bremst. Soll das Fahrzeug bei einer Bergauffahrt im Hang angehalten werden und bei der Bergfahrt sind die Gesamtheit der drehmomenterzeugenden Kolben mit dem Druckmittelzufluß verbunden, um ein maximales Drehmoment erzeugen zu können, so bleibt auch beim Anhalten des Fahrzeugs am Hang die Gesamtheit der drehmomenterzeugenden Kolben mit dem Druckmittelzufluß verbunden, ohne daß eine unerwünschte Schaltung erfolgt, wodurch das Fahrzeug am Hang gehalten wird, bis die Bremse eingefallen ist. Dabei ist das Druckniveau zum Betätigen des Ventils zum Umsteuern des Hubraumumschaltventils oberhalb des Druckniveaus zum Lüften der Bremse. Indem das Ventil in der Druckmittelzuführung zum Umsteuern des Ventils zum Verbinden der drehmomenterzeugenden Kolben mit dem Druckmittelzufluß angeordnet ist, wird eine Schaltung beim Anhalten am Berg unabhängig von einem manuellen oder automatischen Schaltbefehl vom Fahrer verhindert. Da sich dieses Ventil vor dem Ventil zum Verbinden der drehmomenterzeugenden Kolben mit dem Druckmittelzufluß befindet, weist dieses Ventil vorzugsweise die Drosselstellen auf, durch welche der Druckmittelstrom fließt, um das Ventil zum Verbinden der drehmomenterzeugenden Kolben mit dem Druckmittelzulauf umzusteuern. Ist eine Bremse im hydraulischen Radialkolbenmotor vorhanden, wird vorzugsweise der Druck, welcher die hydraulische Bremse lüftet, auch zum Umsteuern des Ventils, welches dem Ventil zum Verbinden der drehmomenterzeugenden Kolben mit dem Druckmittelzufluß vorgeschaltet angeordnet ist, verwendet. Dies hat den Vorteil, daß kein zusätzliches Ventil, welches immer den Druckmittelzufluß abgreift, vorhanden sein muß.

Indem der Druckmittelzufluß zum Umsteuern des Ventils zum Verbinden der drehmomenterzeugenden Kolben mit dem Druckmittelzustrom gedrosselt zu- und abfließt und über eine Dichtstelle gewährleistet ist, daß dieser gedrosselte Zu- und Abfluß nicht durch externes Druckmittel negativ beeinflußt wird, wird ein unerwünschter Schaltstoß bei einer Hoch- und bei einer Rückschaltung verhindert. Indem dem Ventil zum Verbinden der drehmomenterzeugenden Kolben mit dem Druckmittelzufluß ein Ventil vorgeschaltet angeordnet ist, welches unterhalb eines definierten Druckniveaus im Druckmittelzufluß zum hydraulischen Motor den Druckmittelzufluß zum Umsteuern des Ventils zum Verbinden der drehmomenterzeugenden Kolben mit dem Druckmittelzufluß unterbricht, ist gewährleistet, daß unterhalb eines definierten Druckniveaus im Druckmittelzufluß zum hydraulischen Motor die Gesamtheit der drehmomenterzeugenden Kolben mit dem Druckmittelzufluß zum hydraulischen Motor verbunden ist. Somit werden sicherheitskritische Zustände verhindert.

Weitere Einzelheiten sind der Figuren-Beschreibung zu entnehmen.
Es zeigen:
- Fig. 1: einen Schnitt durch einen hydraulischen Motor;

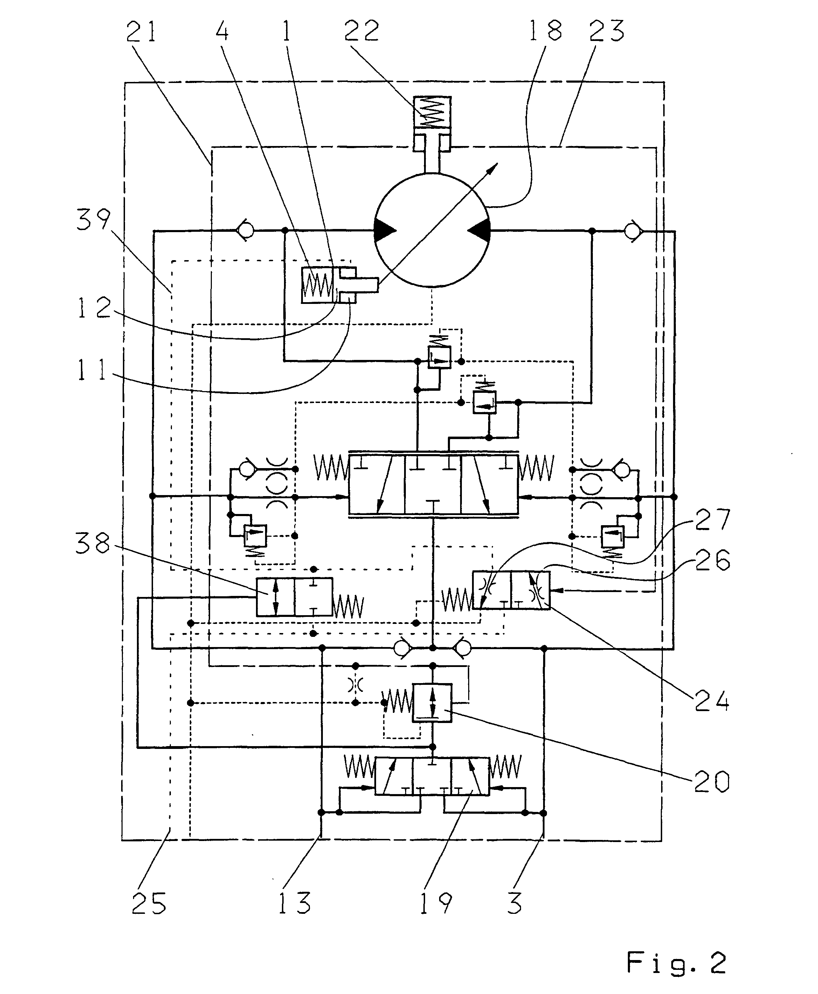

- Fig. 2: ein Hydraulikschema des hydraulischen Motors;

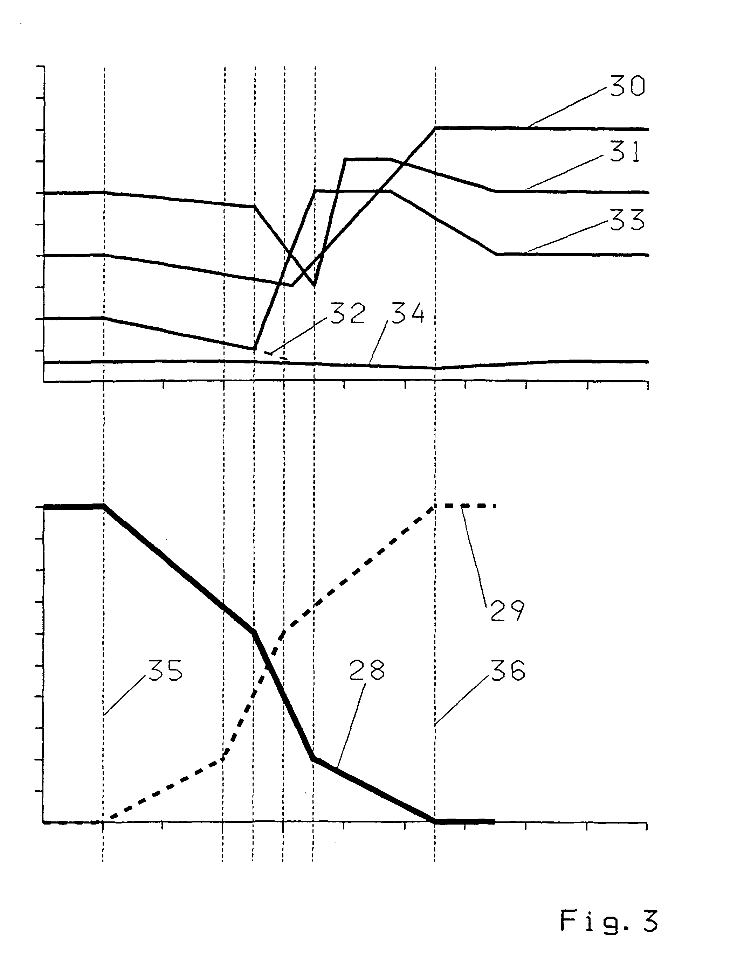

- Fig. 3: ein Schema einer Schaltung der Verbindung des Druckmmittelzuflusses von der Gesamtheit der drehmomenterzeugenden Kolben auf einen Teil der drehmomenterzeugenden Kolben und

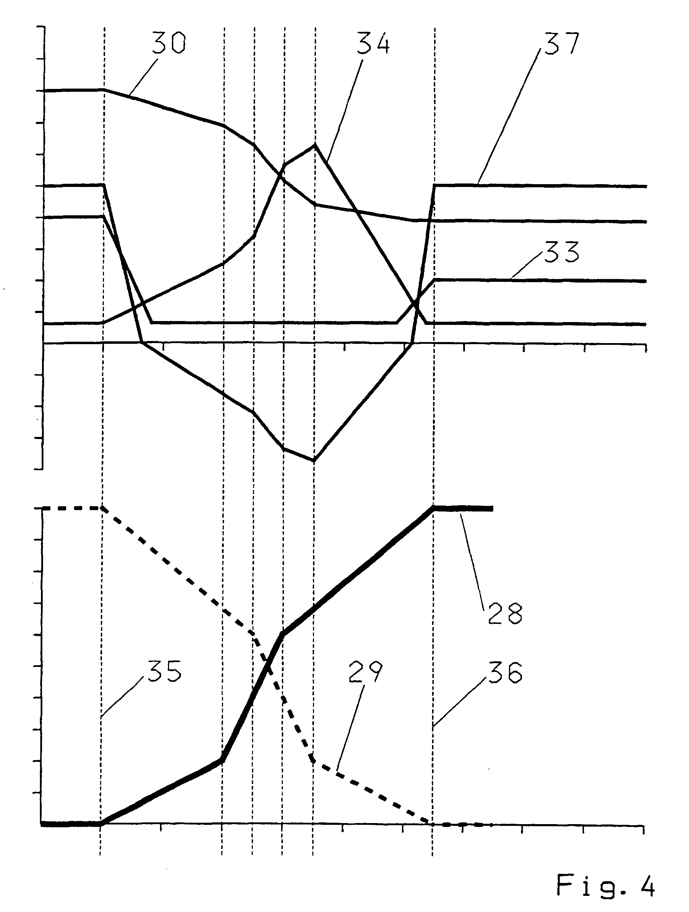

- Fig. 4: ein Schema einer Schaltung der Verbindung des Druckmittelzuflusses von einem Teil der drehmomenterzeugenden Kolben auf die Gesamtheit der drehmomenterzeugenden Kolben.

### Fig. 1:

Ein Ventil 1 zum Verbinden der drehmomenterzeugenden Kolben 2 mit dem Druckmittelzufluß 3 ist unterhalb eines definierten Druckniveaus über eine Feder 4 in seiner Ausgangsstellung. In dieser Ausgangsstellung ist über eine Ausnehmung 5 eine Verbindung im Druckmittelverteiler 6 hergestellt, bei welcher ein erster Teil 7 der drehmomenterzeugenden Kolben und ein zweiter Teil 8 der drehmomenterzeugenden Kolben mit Druckmittel versorgt wird, so daß die Gesamtheit der drehmomenterzeugenden Kolben mit dem Druckmittelzufluß 3 verbunden ist. In dieser Stellung erzeugt der hydraulische Motor sein maximales Drehmoment. Der Kolbenträger 9 kann über eine Bremse 10 drehfest gehalten werden. Indem Druckmittel in den Raum 11 strömt, wird der Kolben 12 des Ventils 1 gegen die Federkraft der Feder 4 verschoben und der zweite Teil 8 der drehmomenterzeugenden Kolben wird mit dem Druckmittelrückfluß 13 verbunden, so daß nur noch der erste Teil 7 der drehmomenterzeugenden Kolben mit Druckmittel beaufschlagt ist und Drehmoment erzeugt. Indem zwischen dem Druckmittelzufluß 3 und dem Raum 11 eine Dichtstelle 14 angeordnet ist, kann Druckmittel in den Raum 11 gedrosselt ein- bzw. abströmen und somit den Kolben 12 gesteuert bewegen, ohne negativ über zusätzliches Druckmittel aus dem Druckmittelzufluß 3, welches in den Raum 11 gelangen könnte, beeinflußt zu werden. Die Seiten 15 des Kolbens 12 sind so ausgeführt, daß sich der Querschnitt 16 und der Querschnitt 17 beim Bewegen des Kolbens 12 nahezu gleichmäßig verändern. Durch das gedrosselte Verschieben des Kolbens 12 und die nahezu gleichmäßige Veränderung des Querschnitts 16 und 17 kann ein Schaltstoß verhindert werden. Soll sich der hydraulische Radialkolbenmotor in die entgegengesetzte Richtung bewegen, so wird der Druckmittelrückfluß 13 mit dem Druckmittelzufluß 3 vertauscht, so daß das Druckmittel in den Druckmittelrückfluß 13 einströmt und über den Druckmittelzufluß 3 abströmt.

### Fig. 2:

Druckmittel gelangt über den Druckmittelzufluß 3 zum hydraulischen Motor 18 und fließt vom hydraulischen Motor 18 über den Druckmittelrückfluß 13 zurück. Über ein Ventil 19 wird ein Ventil 20 immer mit dem Druckmittelzufluß verbunden, wobei das Ventil 20 das Druckniveau begrenzt. Über die Leitung 21 wird bei anstehendem Druck am Druckmittelzufluß 3 die Bremse 22 gelüftet und somit außer Eingriff gebracht. Über eine Leitung 23 wird ein Ventil 24 umgesteuert und verbindet eine Leitung 25 mit einem Raum 11 eines Ventils 1, welches drehmomenterzeugende Kolben mit dem Druckmittelzufluß 3 verbindet und somit das Schluckvolumen des hydraulischen Motors 18 bestimmt. Im Ventil 24 befindet sich eine Drossel 26 in der Zulaufposition und eine Drossel 27 in der Rücklaufposition. Die Drossel 26 ist vorzugsweise größer als die Drossel 27 auszuführen, um während eines Anhaltevorgangs eine Schaltung vom maximalen Schluckvolumen zum minimalen Schluckvolumen zu verzögern. Das Ventil 1 ist so geschaltet, daß bei drucklosem Raum 11 die Feder 4 den Kolben 12 in seine Ausgangsposition schiebt und somit die Gesamtheit der drehmomenterzeugenden Kolben des hydraulischen Radialkolbenmotors 18 mit dem Druckmittelzufluß 3 verbunden ist. Mit der Leitung 25 ist entweder ein automatisches Ventil verbunden, welches unterhalb eines definierten Druckniveaus in dem Druckmittelzufluß 3 die Leitung 25 mit Druckmittel versorgt und somit das Ventil 1 umsteuert, so daß nur ein Teil der drehmomenterzeugenden Kolben mit dem Druckmittelzufluß 3 verbunden ist und dadurch der hydraulische Motor 18 mit höherer Drehzahl dreht und ein geringeres Drehmoment abgibt und oberhalb eines definierten Druckniveaus in dem Druckmittelzufluß 3 die Leitung 25 drucklos schaltet, um das Ventil 1 so umzusteuern, daß die Gesamtheit der drehmomenterzeugenden Kolben mit dem Druckmittelzufluß 3 verbunden ist und somit der hydraulische Motor 18 ein maximales Drehmoment, jedoch eine geringere Drehzahl, erzeugt oder eine manuelle Schalteinrichtung, mit welcher der Fahrer die Leitung 25 mit Druckmittel beaufschlagen oder drucklos schalten kann. Indem das Ventil 24 dem Ventil 1 vorgeschaltet angeordnet ist, können sicherheitskritische Zustände vermieden werden. Ist das Fahrzeug mit einer automatischen Schalteinrichtung ausgestattet und bewegt sich das Fahrzeug mit maximalem Schluckvolumen des hydraulischen Motors 18 bergauf, so ist das Ventil 24 so geschaltet, daß die Leitung 25 mit dem Ventil 1 verbunden ist. Durch die automatische Schaltung oberhalb eines definierten Druckniveaus im Druckmittelzufluß 3 wird die Leitung 25 drucklos gehalten, so daß das Ventil 1 über die Feder 4 in seiner Ausgangsposition alle drehmomenterzeugenden Kolben mit dem Druckmittelzufluß 3 verbindet. Soll das Fahrzeug nun am Hang angehalten werden, so wird der Druckmittelstrom am Druckmittelzufluß 3 reduziert, bis der Druckmittelzufluß 3 nahezu drucklos ist. Ohne das Ventil 24 würde, da das Druckmittel am Druckmittelzufluß 3 unterhalb eines definierten Druckniveaus die automatische Schaltung dazu veranlaßt, die Leitung 25 mit Druckmittel zu versorgen, das Ventil 1 umgesteuert und somit wird sich das Fahrzeug, bis die Bremse 22 einfällt bzw. bis Ventil 1 so angesteuert ist, daß die Verbindung des Druckmittelzulaufs 3 zum Druckmittelrücklauf 13 unterbrochen ist, talabwärts bewegen. Indem das Ventil 24 dem Ventil 1 vorgeschaltet angeordnet ist, wird beim Abfall des Drucks am Druckmittelzufluß 3 unterhalb eines definierten Druckmittelniveaus das Ventil 24 in seine Ausgangsposition umgesteuert und somit die Leitung 25 zum Ventil 1 unterbrochen, so daß das Ventil 1 in seiner Ausgangsposition verbleibt und nicht umsteuert. Somit wird das Fahrzeug am Hang gehalten, bis die Bremse 22 eingefallen ist. Bewegt sich das Fahrzeug mit minimalem Schluckvolumen, d. h. mit druckbeaufschlagtem Ventil 1, talabwärts und der Druckmittelzufluß 3 wird reduziert, um das Fahrzeug anhalten zu können, so schaltet das Ventil 24 unterhalb eines definierten Druckniveaus um und das Ventil 1 wird in seine Ausgangsposition verschoben, so daß das Fahrzeug mit dem maximalen Schluckvolumen, d. h. mit der Gesamtheit der drehmomenterzeugenden Kolben, gebremst werden kann. Die sicherheitskritischen Situationen sind somit behoben. Um die Fahrtrichtung des Fahrzeugs zu ändern, wird die nicht dargestellte Druckmittelpumpe mit dem Druckmittelrückfluß 13 verbunden, wodurch der Druckmittelrückfluß 13 somit der Druckmittelzufluß ist und der Druckmittelzufluß 3 wird mit dem Druckmittelrückfluß verbunden, so daß das Druckmittel über den Druckmittelzufluß 3 abfließt. Indem die Drosseln 26 und 27 in dem Ventil 24 integriert sind, kann der hydraulische Radialkolbenmotor ohne sicherheitskritische Zustände ausgeführt und ein unerwünschter Schaltstoß vermieden werden. Vorzugsweise ist zwischen der Leitung 25 und der Leitung 39 ein Ventil 38 angeordnet, welches oberhalb eines definierten Druckniveaus die Leitung 25 ungedrosselt mit der Leitung 39 verbindet. Das Ventil 38 wird gegen eine Federkraft von dem Druck des Druckmittelzuflusses 3 betätigt. Das Ventil 38 ist so auszulegen, daß das Druckniveau zum Betätigen des Ventils 38 unterhalb des Druckniveaus des nicht dargestellten, automatischen Schaltventils liegt, um bei einer Schaltung im Hang bei geringer Drehzahl und hohem Zulaufdruck eine ungedrosselte Schaltung zu erhalten.

### Fig. 3:

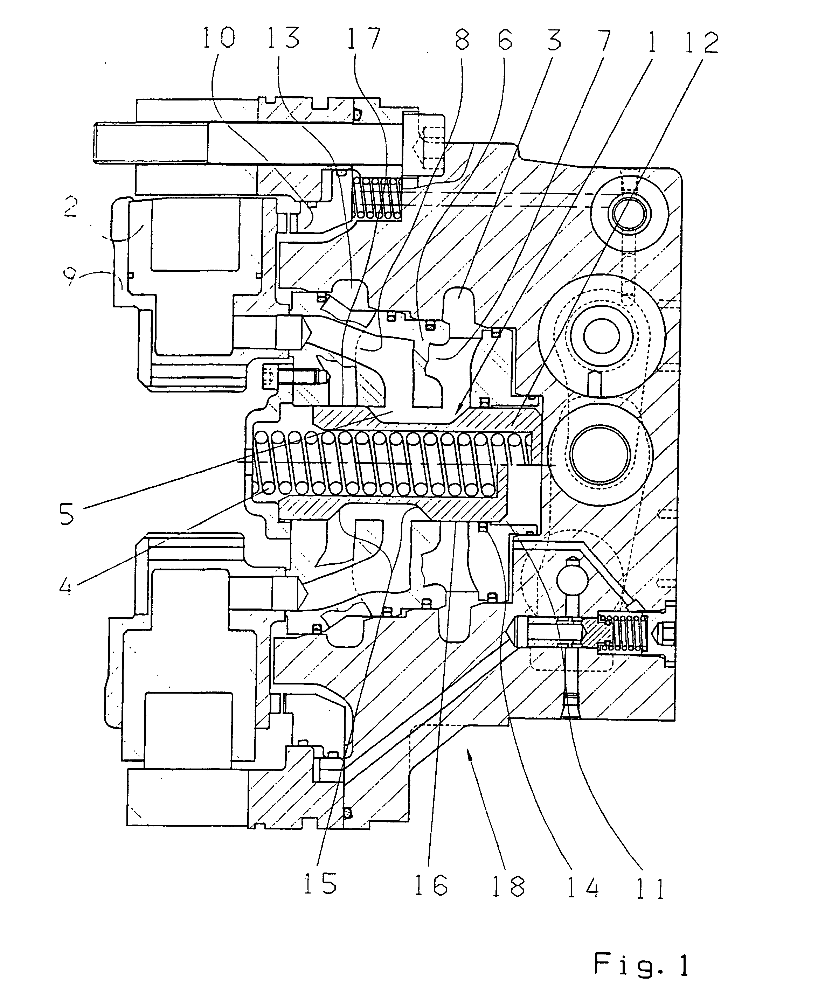

Die Linie 28 stellt die Veränderung des Querschnitts 16 der Fig. 1 dar, welcher sich über dem Hub des Kolbens 12 verändert. Die Linie 29 stellt die Veränderung des Querschnitts 17 der Fig. 1 dar, welcher sich über dem Hub des Kolbens 12 verändert. Die Linie 30 stellt die Veränderung der Drehzahl des Hydraulikmotors bei Veränderung der Querschnitte 16 und 17 durch Verschieben des Kolbens 12 dar. Die Linie 31 stellt das Abtriebsdrehmoment des Hydromotors der Fig. 1 der drehmomenterzeugenden Kolben über der Veränderung der Querschnitte 16 und 17 durch Verschiebung des Kolbens 12 dar. Die Linie 32 stellt den Druck des zweiten Teils 8 der Fig. 1 der drehmomenterzeugenden Kolben über der Veränderung des Querschnitts 16 und 17 durch Verschieben des Kolbens 12 dar. Die Linie 33 stellt den Druck am Druckmittelzufluß 3 über der Veränderung der Querschnitte 16 und 17 durch Verschieben des Kolbens 12 dar. Die Linie 34 stellt den Druck am Druckmittelrückfluß 13 über der Veränderung der Querschnitte 16 und 17 durch Verschieben des Kolbens 12 dar. Beim Beginn der Schaltung ist der Kolben 12 in seiner Ausgangsposition und wird dann gedrosselt gegen die Federkraft der Feder 4 verschoben. Der Querschnitt 16, dessen Veränderung die Linie 28 anzeigt, ist am Beginn der Schaltung vollständig geöffnet. Der Querschnitt 17, dessen Veränderung die Linie 29 anzeigt, ist beim Beginn der Schaltung vollständig geschlossen. Ab dem Verschiebeweg 35 verringert sich der Querschnitt 16 und es erweitert sich der Querschnitt 17, so daß nahezu gleichmäßig der zweite Teil 8 der drehmomenterzeugenden Kolben mit dem Druckmittelrückfluß verbunden wird. Dadurch sinkt das Drehmoment der Linie 32 bis auf die Linie 34 ab. Ab dem Verschiebeweg 36 ist der zweite Teil 8 der drehmomenterzeugenden Kolben vollständig mit dem Druckmittelrückfluß 13 verbunden und vom Druckmittelzufluß 3 abgetrennt.

### Fig. 4:

Die Linie 28 stellt die Veränderung des Querschnitts 16 der Fig. 1 dar, welcher sich über dem Hub des Kolbens 12 verändert. Die Linie 29 stellt die Veränderung des Querschnitts 17 der Fig. 1 dar, welcher sich über dem Hub des Kolbens 12 verändert. Die Linie 30 stellt die Veränderung der Drehzahl des Hydraulikmotors bei Veränderung der Querschnitte 16 und 17 durch Verschieben des Kolbens 12 dar. Die Linie 37 stellt das Abtriebsdrehmoment des hydraulischen Motors über der Veränderung der Querschnitte 16 und 17 durch Verschiebung des Kolbens 12 dar. Die Linie 33 stellt den Druck am Druckmittelzufluß 3 im hydraulischen Motor über der Veränderung der Querschnitte 16 und 17 durch Verschieben des Kolbens 12 dar. Die Linie 34 stellt den Druck am Druckmittelrückfluß 13 im hydraulischen Motor über der Veränderung der Querschnitte 16 und 17 durch Verschieben des Kolbens 12 dar. Beim Beginn der Schaltung ist der Kolben 12 in seiner Endposition und wird dann gedrosselt durch die Federkraft der Feder 4 verschoben. Der Querschnitt 16, dessen Veränderung die Linie 28 anzeigt, ist am Beginn der Schaltung vollständig geschlossen. Der Querschnitt 17, dessen Veränderung die Linie 29 anzeigt, ist beim Beginn der Schaltung vollständig geöffnet. Ab dem Verschiebeweg 35 verringert sich der Querschnitt 17 und es erweitert sich der Querschnitt 16, so daß nahezu gleichmäßig der zweite Teil 8 der drehmomenterzeugenden Kolben mit dem Druckmittelzufluß verbunden wird. Dadurch sinkt das Drehmoment der Linie 32 bis auf die Linie 34 ab. Ab dem Verschiebeweg 36 ist der zweite Teil 8 der drehmomenterzeugenden Kolben vollständig mit dem Druckmittelzufluß 3 verbunden und vom Druckmittelrückfluß 13 abgetrennt.

### Bezugszeichen

- 1: Ventil
- 2: drehmomenterzeugende Kolben
- 3: Druckmittelzufluß
- 4: Feder
- 5: Ausnehmung
- 6: Druckmittelverteiler
- 7: erster Teil
- 8: zweiter Teil
- 9: Kolbenträger
- 10: Bremse
- 11: Raum
- 12: Kolben
- 13: Druckmittelrückfluß
- 14: Dichtstelle
- 15: Seite
- 16: Querschnitt
- 17: Querschnitt
- 18: hydraulischer Motor
- 19: Ventil
- 20: Ventil
- 21: Leitung
- 22: Bremse
- 23: Leitung
- 24: Ventil
- 25: Leitung
- 26: Drossel
- 27: Drossel
- 28: Linie
- 29: Linie
- 30: Linie
- 31: Linie
- 32: Linie
- 33: Linie
- 34: Linie
- 35: Verschiebeweg
- 36: Verschiebeweg
- 37: Linie
- 38: Ventil
- 39: Leitung

## Patentansprüche

1. Hydraulischer Radialkolbenmotor, bei welchem die Gesamtheit der drehmomenterzeugenden Kolben mit Druckmittel beaufschlagt werden kann, indem ein Druckmittelzufluß (3) über ein Ventil (1) mit der Gesamtheit der drehmomenterzeugenden Kolben verbunden wird, indem das Ventil (1) sich in einer ersten Stellung befindet und bei welchem ein Teil (7) der drehmomenterzeugenden Kolben mit Druckmittel beaufschlagt werden kann, indem ein Druckmittelzufluß (3) über ein Ventil (1) mit einem Teil (7) der drehmomenterzeugenden Kolben verbunden wird und ein verbleibender Teil (8) der drehmomenterzeugenden Kolben mit einem Druckmittelrückfluß (13) verbunden wird, indem das Ventil (1) zur Verbindung der drehmomenterzeugenden Kolben mit dem Druckmittel in eine zweite Stellung umgesteuert wird, **dadurch gekennzeichnet, daß** das Ventil (1) zur Verbindung der drehmomenterzeugenden Kolben mit dem Druckmittelzufluß (3) umgesteuert wird, indem Druckmittel über eine Drosselstelle (26, 27) dem Ventil (1) zugeführt oder abgeführt wird, wobei das Ventil (1) eine Dichtstelle (14) zwischen dem Druckmittelzufluß (3) zu den drehmomenterzeugenden Kolben und dem über eine Drosselstelle (26, 27) gedrosselten Druckmittelzufluß (3) zum Umsteuern des Ventils (1) aufweist.

2. Hydraulischer Radialkolbenmotor nach Anspruch 1, **dadurch gekennzeichnet, daß** ein Verbindungsquerschnitt (16, 17) des Ventils (1), welches einen Teil (7) der drehmomenterzeugenden Kolben mit einem weiteren Teil (8) der drehmomenterzeugenden Kolben so mit dem Druckmittelzufluß (3) verbindet, daß die Gesamtheit der drehmomenterzeugenden Kolben mit Druckmittel beaufschlagt werden kann, beim Umsteuern des Ventils (1) von einer ersten Stellung in eine zweite Stellung sich gleichmäßig verkleinert, bis die Verbindung von einem Teil (7) der drehmomenterzeugenden Kolben mit einem weiteren Teil (8) der drehmomenterzeugenden Kolben unterbrochen ist, und ein Teil (7) der drehmomenterzeugenden Kolben mit dem Druckmittelzufluß (3) und ein Teil (8) der drehmomenterzeugenden Kolben mit dem Druckmittelrückfluß (13) verbunden ist.

3. Hydraulischer Radialkolbenmotor nach Anspruch 1, **dadurch gekennzeichnet, daß** ein Verbindungsquerschnitt (16, 17) des Ventils (1), welches in einer zweiten Stellung des Ventils (1) ein Teil (8) der drehmomenterzeugenden Kolben mit dem Druckmittelrückfluß (13) verbindet, beim Umsteuern des Ventiles von einer zweiten Stellung in eine erste Stellung sich gleichmäßig verkleinert, bis die Verbindung von einem Teil (8) der drehmomenterzeugenden Kolben mit dem Druckmittelrückfluß (13) unterbrochen ist und ein Teil (8) der drehmomenterzeugenden Kolben mit einem weiteren Teil (7) der drehmomenterzeugenden Kolben mit dem Druckmittelzufluß (3) verbunden ist.

4. Hydraulischer Radialkolbenmotor nach Anspruch 1, **dadurch gekennzeichnet, daß** das Ventil (1) zum Verbinden der drehmomenterzeugenden Kolben mit dem Druckmittelzufluß (3) koaxial in einer Druckmittelzuführung (6), welche Druckmittel zu einem Kolbenträger leitet, angeordnet ist.

5. Hydraulischer Radialkolbenmotor nach Anspruch 1, **dadurch gekennzeichnet, daß** das Ventil (1) zum Verbinden der drehmomenterzeugenden Kolben mit dem Druckmittelzufluß (3) über eine Federkraft gegen ein gedrosselt abnehmendes Druckniveau in eine erste Stellung umgesteuert wird, in welcher die Gesamtheit der drehmomenterzeugenden Kolben mit dem Druckmittelzufluß (3) verbunden ist und über ein gedrosselt ansteigendes Druckniveau gegen eine Federkraft in eine zweite Stellung umgesteuert wird, in welcher ein Teil (7) der drehmomenterzeugenden Kolben mit Druckmittel beaufschlagt werden kann, und ein verbleibender Teil (8) der drehmomenterzeugenden Kolben mit einem Druckmittelrückfluß (13) verbunden wird.

6. Hydraulischer Radialkolbenmotor nach Anspruch 1, **dadurch gekennzeichnet, daß** der Radialkolbenmotor ein Planetengetriebe zum Antrieb einer Baumaschine, vorzugsweise eines Raupenbaggers, antreibt.

7. Hydraulischer Radialkolbenmotor, bei welchem die Gesamtheit der drehmomenterzeugenden Kolben mit Druckmittel beaufschlagt werden kann, indem ein Druckmittelzufluß (3) über ein Ventil (1) mit der Gesamtheit der drehmomenterzeugenden Kolben verbunden wird, indem das Ventil (1) sich in einer ersten Stellung befindet und bei welchem ein Teil (7) der drehmomenterzeugenden Kolben mit Druckmittel beaufschlagt werden kann, indem ein Druckmittelzufluß (3) über ein Ventil (1) mit einem Teil (7) der drehmomenterzeugenden Kolben verbunden wird und ein verbleibender Teil (8) der drehmomenterzeugenden Kolben mit einem Druckmittelrückfluß (13) verbunden wird, indem das Ventil (1) zur Verbindung der drehmomenterzeugenden Kolben mit dem Druckmittel in eine zweite Stellung umgesteuert wird, **dadurch gekennzeichnet, daß** dem Ventil (1) zum Verbinden der drehmomenterzeugenden Kolben mit dem Druckmittelzufluß (3) ein Ventil (24) vorgeschaltet angeordnet ist, welches den Druckmittelzufluß zum Umsteuern des Ventils (1) zum Verbinden der drehmomenterzeugenden Kolben mit dem Druckmittelzufluß (3) so steuert, daß unterhalb eines definierten Druckniveaus im Druckmittelzufluß (3) zu den drehmomenterzeugenden Kolben die Gesamtheit der drehmomenterzeugenden Kolben mit dem Druckmittelzufluß (3) verbunden ist.

8. Hydraulischer Radialkolbenmotor nach den Ansprüchen 1 und 7, **dadurch gekennzeichnet, daß** die Drosselstelle (26, 27), welche das Druckmittel, welches das Ventil (1) zum Verbinden der drehmomenterzeugenden Kolben mit dem Druckmittelzufluß (3) umsteuert, drosselt, in dem Ventil (24), welches dem Ventil (1) zum Verbinden der drehmomenterzeugenden Kolben mit dem Druckmittelzufluß (3) vorgeschaltet angeordnet ist, angeordnet ist.

9. Hydraulischer Radialkolbenmotor nach Anspruch 7, **dadurch gekennzeichnet, daß** das Druckmittel, welches das Ventil (24), welches den Druckmittelzufluß zum Umsteuern des Ventils (1) zum Verbinden der drehmomenterzeugenden Kolben mit dem Druckmittelzufluß (3) steuert, umsteuert mit dem Druckmittel, welches eine Bremse (22) lüftet, welche den hydraulischen Motor bremst, in Verbindung steht.

10. Hydraulischer Radialkolbenmotor nach Anspruch 1, **dadurch gekennzeichnet, daß** oberhalb eines definierten Druckniveaus im Druckmittelzufluß (3) das Ventil (1) zum Verbinden der drehmomenterzeugenden Kolben mit dem Druckmittelzufluß (3) ungedrosselt ansteuerbar ist.

## Claims

1. Hydraulic radial piston motor, in which all of the torque-generating pistons may be loaded with pressure medium in that a pressure medium afflux (3) is connected by a valve (1) to all of the torque-generating pistons in that the valve (1) is situated in a first position and in which a group (7) of the torque-generating pistons may be loaded with pressure medium in that a pressure medium afflux (3) is connected by a valve (1) to a group (7) of the torque-generating pistons and a remaining group (8) of the torque-generating pistons is connected to a pressure medium reflux (13) in that the valve (1) for connecting the torque-generating pistons to the pressure medium is switched over into a second position, **characterized in that** the valve (1) for connecting the torque-generating pistons to the pressure medium afflux (3) is switched over **in that** pressure medium is fed via a throttling point (26, 27) to or away from the valve (1), wherein the valve (1) comprises a sealing point (14) between the pressure medium afflux (3) to the torque-generating pistons and the pressure medium afflux (3) throttled by means of a throttling point (26, 27) for switching over the valve (1).

2. Hydraulic radial piston motor according to claim 1, **characterized in that** a connection cross section (16, 17) of the valve (1), which connects a group (7) of the torque-generating pistons with a further group (8) of the torque-generating pistons in such a way to the pressure medium afflux (3) that all of the torque-generating pistons may be loaded with pressure medium, during switching-over of the valve (1) from a first position to a second position decreases uniformly until the connection of one group (7) of torque-generating pistons with a further group (8) of torque-generating pistons is interrupted, and one group (7) of torque-generating pistons is connected to the pressure medium afflux (3) and one group (8) of torque-generating pistons is connected to the pressure medium reflux (13).

3. Hydraulic radial piston motor according to claim 1, **characterized in that** a connection cross section (16, 17) of the valve (1), which in a second position of the valve (1) connects one group (8) of torque-generating pistons to the pressure medium reflux (13), during switching-over of the valve from a second position to a first position decreases uniformly until the connection of one group (8) of torque-generating pistons to the pressure medium reflux (13) is interrupted and one group (8) of torque-generating pistons is connected with a further group (7) of torque-generating pistons to the pressure medium afflux (3).

4. Hydraulic radial piston motor according to claim 1, **characterized in that** the valve (1) for connecting the torque-generating pistons to the pressure medium afflux (3) is disposed coaxially in a pressure medium feed line (6), which conveys pressure medium to a piston support.

5. Hydraulic radial piston motor according to claim 1, **characterized in that** the valve (1) for connecting the torque-generating pistons to the pressure medium afflux (3) is switched over by means of a spring action against a pressure level decreasing in a throttled manner into a first position, in which all of the torque-generating pistons are connected to the pressure medium afflux (3) and is switched over by means of a pressure level increasing in a throttled manner counter to a spring action into a second position, in which one group (7) of torque-generating pistons may be loaded with pressure medium, and a remaining group (8) of torque-generating pistons is connected to a pressure medium reflux (13).

6. Hydraulic radial piston motor according to claim 1, **characterized in that** the radial piston motor drives a planetary gear for driving a construction machine, preferably a crawler excavator.

7. Hydraulic radial piston motor, in which all of the torque-generating pistons may be loaded with pressure medium in that a pressure medium afflux (3) is connected by a valve (1) to all of the torque-generating pistons in that the valve (1) is situated in a first position and in which a group (7) of the torque-generating pistons may be loaded with pressure medium in that a pressure medium afflux (3) is connected by a valve (1) to one group (7) of the torque-generating pistons and a remaining group (8) of the torque-generating pistons is connected to a pressure medium reflux (13) in that the valve (1) for connecting the torque-generating pistons to the pressure medium is switched over into a second position, **characterized in that** disposed upstream of the valve (1) for connecting the torque-generating pistons to the pressure medium afflux (3) is a valve (24), by means of which the pressure medium afflux for switching over the valve (1) for connecting the torque-generating pistons to the pressure medium afflux (3) is controlled in such a way that below a defined pressure level in the pressure medium afflux (3) to the torque-generating pistons all of the torque-generating pistons are connected to the pressure medium afflux (3).

8. Hydraulic radial piston motor according to claims 1 and 7, **characterized in that** the throttling point (26, 27), which throttles the pressure medium that switches over the valve (1) for connecting the torque-generating pistons to the pressure medium afflux (3), is disposed in the valve (24), which is disposed upstream of the valve (1) for connecting the torque-generating pistons to the pressure medium afflux (3).

9. Hydraulic radial piston motor according to claim 7, **characterized in that** the pressure medium, which switches over the valve (24) that controls the pressure medium afflux for switching over the valve (1) for connecting the torque-generating pistons to the pressure medium afflux (3), is in communication with the pressure medium, which releases a brake (22) that brakes the hydraulic motor.

10. Hydraulic radial piston motor according to claim 1, **characterized in that** above a defined pressure level in the pressure medium afflux (3) the valve (1) for connecting the torque-generating pistons to the pressure medium afflux (3) is activatable in an unthrottled manner.

## Revendications

1. Moteur hydraulique à pistons radiaux dans lequel la totalité des pistons générateurs de couple peut être attaquée avec du milieu sous pression par le fait qu'une arrivée du milieu sous pression (3) est reliée à la totalité des pistons générateurs de couple par l'intermédiaire d'une soupape (1), par le fait que la soupape (1) se trouve dans une première position, et dans lequel une partie (7) des pistons générateurs de couple peut être attaquée par le milieu sous pression, par le fait qu'une arrivée du milieu sous pression (3) est reliée à une partie (7) des pistons générateurs de couple par l'intermédiaire d'une soupape (1) et qu'une partie restante (8) des pistons générateurs de couple est reliée à un retour du milieu sous pression (13), par le fait que la soupape (1) est inversée dans une deuxième position pour relier les pistons générateurs de couple au milieu sous pression, **caractérisé en ce que** la soupape (1) est inversée pour relier les pistons générateurs de couple à l'arrivée du milieu sous pression (3) par le fait que du milieu sous pression est amené à la soupape (1) ou en est évacué par l'intermédiaire d'une zone d'étranglement (26, 27), la soupape (1) comportant une zone de fermeture étanche (14) entre l'arrivée du milieu sous pression (3) aux pistons générateurs de couple et le retour du milieu sous pression (3) avec étranglement au moyen d'une zone d'étranglement (26, 27) pour inverser la soupape (1).

2. Moteur hydraulique à pistons radiaux selon la revendication 1, **caractérisé en ce qu'**une section de communication (16, 17) de la soupape (1) qui relie une partie (7) des pistons générateurs de couple à une autre partie (8) des pistons générateurs de couple à l'arrivée du milieu sous pression (3) de telle manière que la totalité des pistons générateurs de couple puisse être attaquée par le milieu sous pression, lors de l'inversion de la soupape (1) d'une première position à une deuxième position diminue progressivement jusqu'à ce que la communication d'une partie (7) des pistons générateurs de couple avec une autre partie (8) des pistons générateurs de couple soit interrompue et qu'une partie (7) des pistons générateurs de couple soit reliée à l'arrivée du milieu sous pression (3) et une partie (8) des pistons générateurs de couple soit reliée au retour du milieu sous pression (13).

3. Moteur hydraulique à pistons radiaux selon la revendication 1, **caractérisé en ce qu'**une section de communication (16, 17) de la soupape (1) qui relie une partie (8) des pistons générateurs de couple au retour du milieu sous pression (13) dans une deuxième position de la soupape (1), se rétrécit régulièrement lors de l'inversion de la soupape d'une première position à une première position jusqu'à ce que la communication entre une partie (8) des pistons générateurs de couple et le retour du milieu sous pression (13) soit interrompue et qu'une partie (8) des pistons générateurs de couple avec une autre partie (7) des pistons générateurs de couple soit reliée avec le retour du milieu sous pression (3).

4. Moteur hydraulique à pistons radiaux selon la revendication 1, **caractérisé en ce que** la soupape (1) servant à relier les pistons générateurs de couple à l'arrivée du milieu sous pression (3) est disposée coaxialement dans une arrivée du milieu sous pression (6) qui conduit le milieu sous pression à un support de pistons.

5. Moteur hydraulique à pistons radiaux selon la revendication 1, **caractérisé en ce que** la soupape (1) servant à relier les pistons générateurs de couple à l'arrivée du milieu sous pression (3) est inversée, au moyen d'une force élastique, à l'encontre d'un niveau de pression qui décroît avec étranglement, sur une première position dans laquelle la totalité des pistons générateurs de couple est reliée à l'arrivée du milieu sous pression (3), tandis que, au-dessus d'un niveau de pression qui croît avec étranglement, elle est inversée à l'encontre d'une force élastique sur une deuxième position dans laquelle une partie (7) des pistons générateurs de couple peut être attaquée avec du milieu sous pression, et une partie restante (8) des pistons générateurs de couple est reliée à un retour du milieu sous pression (13).

6. Moteur hydraulique à pistons radiaux selon la revendication 1, **caractérisé en ce que** le moteur hydraulique à pistons radiaux entraîne un train épicycloïdal destiné à entraîner un engin de chantier, de préférence une excavatrice à chenilles.

7. Moteur hydraulique à pistons radiaux dans lequel la totalité des pistons générateurs de couple peut être attaquée avec du milieu sous pression, par le fait qu'une arrivée du milieu sous pression (3) est reliée à la totalité des pistons générateurs de couple par l'intermédiaire d'une soupape (1), par le fait que la soupape (1) se trouve dans une première position, et dans lequel une partie (7) des pistons générateurs de couple peut être attaquée par le milieu sous pression, par le fait qu'une arrivée du milieu sous pression (3) est reliée à une partie (7) des pistons générateurs de couple par l'intermédiaire d'une soupape (1) et qu'une partie restante (8) des pistons générateurs de couple est reliée à un retour du milieu sous pression (13), par le fait que la soupape (1) est inversée sur une deuxième position pour relier les pistons générateurs de couple au milieu sous pression, **caractérisé en ce qu'**en amont de la soupape (1) servant à relier les pistons générateurs de couple à l'arrivée du milieu sous pression (3), est placée une soupape (24) qui commande l'arrivée du milieu sous pression pour inverser la soupape (1) de façon à relier les pistons générateurs de couple à l'arrivée du milieu sous pression (3) de telle manière qu'en dessous d'un niveau de pression défini dans l'arrivée du milieu sous pression (3) aux pistons générateurs de couple, la totalité des pistons générateurs de couple soit reliée à l'arrivée du milieu sous pression (3).

8. Moteur hydraulique à pistons radiaux selon les revendications 1 et 7, **caractérisé en ce que** la zone d'étranglement (26, 27) qui étrangle le milieu sous pression qui inverse la soupape (1) servant à relier les pistons générateurs de couple à l'arrivée de milieu sous pression (3) est agencée dans la soupape (24) qui est placée en amont de la soupape (1) servant à relier les pistons générateurs de couple à l'arrivée du milieu sous pression (3).

9. Moteur hydraulique à pistons radiaux selon la revendication 7, **caractérisé en ce que** le milieu sous pression inverse la soupape (24) qui commande l'arrivée du milieu sous pression pour inverser la soupape (1) servant à relier les pistons générateurs de couple à l'arrivée du milieu sous pression (3), est en communication avec le milieu sous pression, qui desserre un frein (22) qui freine le moteur hydraulique.

10. Moteur hydraulique à pistons radiaux selon la revendication 1, **caractérisé en ce qu'**au-dessus d'un niveau de pression défini dans l'arrivée de milieu sous pression (3), la soupape (1) servant à relier les pistons générateurs de couple à l'arrivée du milieu sous pression (3) peut être pilotée sans étranglement.
